# EUROPEAN PATENT SPECIFICATION

(11) **EP 4 240 649 B1**
(45) Date of publication and mention of the grant of the patent: **10.12.2025**
(21) Application number: 21820684.5
(22) Date of filing: 08.11.2021
(51) Int. Cl.: B64C 5/02, B64C 39/00, B64C 27/52, B64C 27/02, B64C 29/00, B64C 39/02

(54) **TRANSFORMABLE TYPE VTOL AIRCRAFT**
TRANSFORMIERBARES VTOL-FLUGZEUG
AVION TRANSFORMABLE DE TYPE VTOL

(30) Priority: 08.11.2020 US 202063111032 P
(43) Date of publication of application: 13.09.2023
(73) Proprietor: Shwartz, Shaul, 4050875 Even Yehuda (IL)
(72) Inventor: SHWARTZ, Aviv, 4050875 Even Yehuda (IL); SHWARTZ, Shaul, 4050875 Even Yehuda (IL)
(74) Representative: Kurig, Thomas
(86) International application number: PCT/IB2021/060299
(87) International publication number: WO 2022/097107

(56) References cited:
- CN-A- 111 591 437
- US-A- 3 820 743
- US-A1- 2010 230 547
- US-A1- 2011 062 278
- US-A1- 2016 311 545
- US-A1- 2017 043 867
- US-A1- 2018 370 624
- US-A1- 2020 010 182
- US-B1- 6 382 556

## Description

### FIELD OF THE INVENTION

The present invention relates generally to vertical take-off and landing (VTOL) aircraft, and specifically to a monocopter capable of taking-off and landing vertically and flying horizontally as a standard airplane.

### BACKGROUND OF THE INVENTION

There are many manned and unmanned aircraft that can take off or land vertically, and thus do not need a runway. For taking off, landing or hovering, many of these aircraft use a direct thrust of a propeller or jet stream in order to acquire lift. In one example, the aircraft sits on its tail prior to taking off and after landing, so that its thrust is vectored up. In another example, the propellers are turned upward about the pitch axis (the lateral axis that extends horizontally outwards from the fuselage), or a jet stream is deflected downward. When using these methods, there is a need for a very high-power source in order to create enough lift, compared to the power needed when the lift is being created by a fixed wing of a cruising aircraft, and as a result, aircrafts of this kind need huge engines.

Another air vehicle that can take off and land vertically is a monocopter, which rotates around itself about the yaw axis (the axis that extends vertically through the fuselage). The monocopter is typically powered by one propeller placed off center of gravity, which causes the entire monocopter to rotate around its center of gravity about the yaw axis (the monocopter rotates in azimuth). While rotating, a single wing creates enough lift and the monocopter can take off and land efficiently, using relatively low power in order to take off, land or hover. However, monocopters are not capable of preforming an efficient or highspeed cruise flight.

PCT Patent Application WO 2018/147810 describes an aircraft including a fuselage and a pair of wings rotatably coupled to opposing lateral sides of the fuselage. The wings can rotate about the pitch axis. A thrust motor is mounted on each wing. By rotating the wings about the pitch axis, the aircraft can be selectively operated in a cruising mode, in which the pair of thrust motors provide thrust in a common direction, and a hover mode, in which the pair of thrust motors provide thrust in opposite directions so that the pair of wings are in a permanent-rotation- state about the yaw axis.

US 3820743 A discloses a vertical take-off and landing air and space craft which is a wing having a cabin mounted therein or thereon. An engine, engine mount, ailerons, elevators and rudders are pivotally mounted to the wing portion and are movable to a position relative thereto to cause a spinning motion to the wing, similar to that of a falling maple seed, to thereby impart a vertical ascent or descent to the craft; the engine, engine mount, ailerons, elevators and rudders being movable to another position to thereby impart horizontal, non-spinning flight to the craft.

### SUMMARY

The present invention seeks to provide a novel aircraft that can be transformed between being a monocopter capable of taking-off and landing vertically and being a standard airplane capable of flying horizontally, as is described more in detail hereinbelow.

The invention is defined in appended claim 1. Beneficial embodiments are presented in the dependent claims. The following disclosure serves a better understanding of the present invention.

### BRIEF DESCRIPTION OF THE DRAWINGS

The present invention will be understood and appreciated more fully from the following detailed description taken in conjunction with the drawings in which:
Fig. 1 is a simplified pictorial illustration of an aircraft, in accordance with a nonlimiting embodiment of the present invention;
Fig. 2 is a simplified pictorial illustration of the aircraft, with the vertical stabilizer pivoted so that the vertical stabilizer, the horizontal stabilizer, and the elevator form together a one wing structure;
Fig. 3 is a simplified sectional illustration of the one wing structure, taken along lines A- A in Fig. 2;
Fig. 4 is a simplified pictorial illustration of a take-off support device for the aircraft, in accordance with a non-limiting embodiment of the present invention;
Fig. 5 is a simplified cross section view of the one wing structure and its attachment arrangement to the fuselage;
Fig. 5A is an enlargement of the connection area between the wing structure and the fuselage;
Fig. 6 is a simplified side-view illustration of the aircraft, in accordance with a non-limiting embodiment of the present invention;
Fig. 7 is a simplified illustration of an aircraft in accordance with another non-limiting embodiment of the present invention, in which the aircraft has two motors, each one located on one of the wings;
Fig. 7A is a simplified illustration of one of the motors mounted on a pivot or hinge, so that the propeller can be rotated backward;
Fig. 8 is a simplified top view illustration of an aircraft in accordance with another non-limiting embodiment of the present invention, while hovering, in which the aircraft takes the form of a canard airplane;
Fig. 8A is a sectional view of the one wing structure, taken along lines B-B in Fig. 8;
Fig. 9 is a simplified cross section view of the aircraft in another embodiment, in which an additional compartment is added;
Fig. 10 is a simplified top view of the transformable type VTOL aircraft in another configuration of a canard aircraft.
Fig. 11A is a simplified top view illustration of the one wing, in accordance with another non-limiting embodiment of the present invention, in which the one wing is foldable;
Fig. 11B is a cross sectional view of line c-c in Fig. 11A
Figs. 11C is a simplified illustration of foldable or pivotable parts of the wing pivoted about hinges to create a substantially closed structure;
Fig. 11D is a simplified illustrations of pivoting parts of the one wing; and
Fig. 12 is a top view of another embodiment of the invention, in which the wings are asymmetrical.

### DETAILED DESCRIPTION

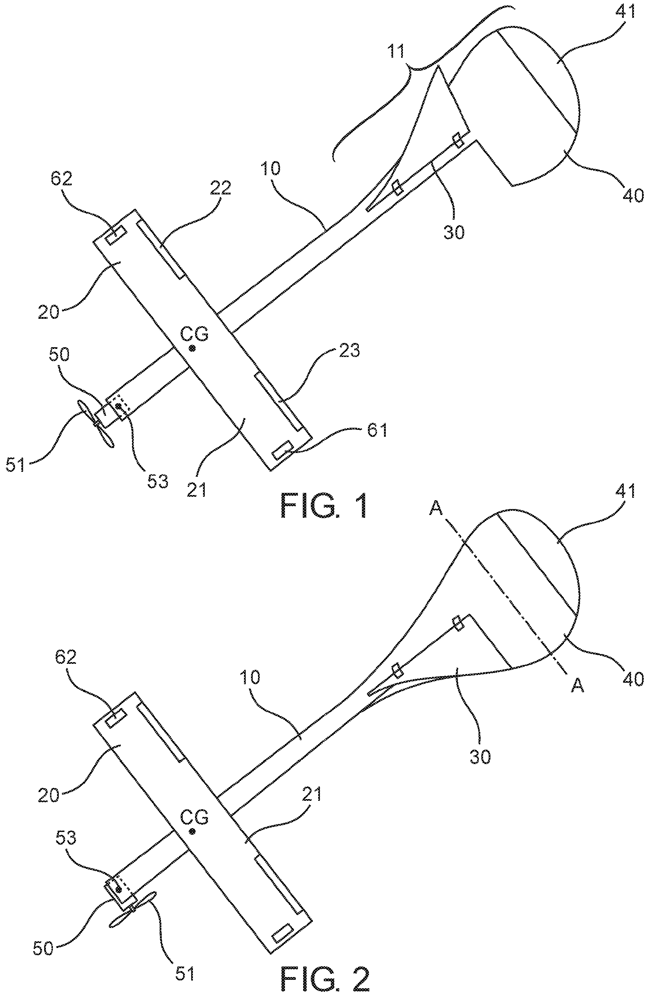

Reference is now made to Fig. 1, which illustrates an aircraft, in accordance with a non-limiting embodiment of the present invention.

The aircraft has a fuselage 10, which is connected to a tail assembly 11. An engine or motor 50 is coupled to the front end of the fuselage 10 and may have a propeller 51, but instead can be a jet engine, or any other means that create thrust, as known in the art. Accordingly, the term "engine" is used throughout the specification and claims to encompass any kind of thrust provider, and is used interchangeably with the term "motor". The rear side of the fuselage 10 has coupled thereto a vertical stabilizer 30, a horizontal stabilizer 40 and an elevator 41. The aircraft further includes wings 20 and 21 with ailerons 22 and 23. Optionally, on the tips of the wing may be attached components that are relatively heavy, e.g., batteries 61 and 62 that can power engine 50. Wings 20 and 21 may have relatively small dimensions. The task of these wings is to create lift while cruising, and they do not play a role in take-off or landing. Prior art aircraft require a large wing area in order to provide sufficient lift in the relatively low speed while taking off or landing. In contrast, in the present invention, the small wing provides an efficient cruise flight, and its small size is an advantage of the present invention.

In Fig. 1, the center of gravity of the aircraft is marked as CG. The exact point of the center of gravity is derived by considerations of stability and efficiency, as is known in the art.

Fig. 2 is a top view of the aircraft while taking off, landing or hovering. In this configuration, the vertical stabilizer 30 is turned by 90° about the roll axis (the longitudinal axis of the fuselage), in this case downward, about its base, as so to substantially create one plane with the horizontal stabilizer 40. This rotational movement can be accomplished by one of the methods used to control flaps, ailerons or rudders, which are well known in the art.

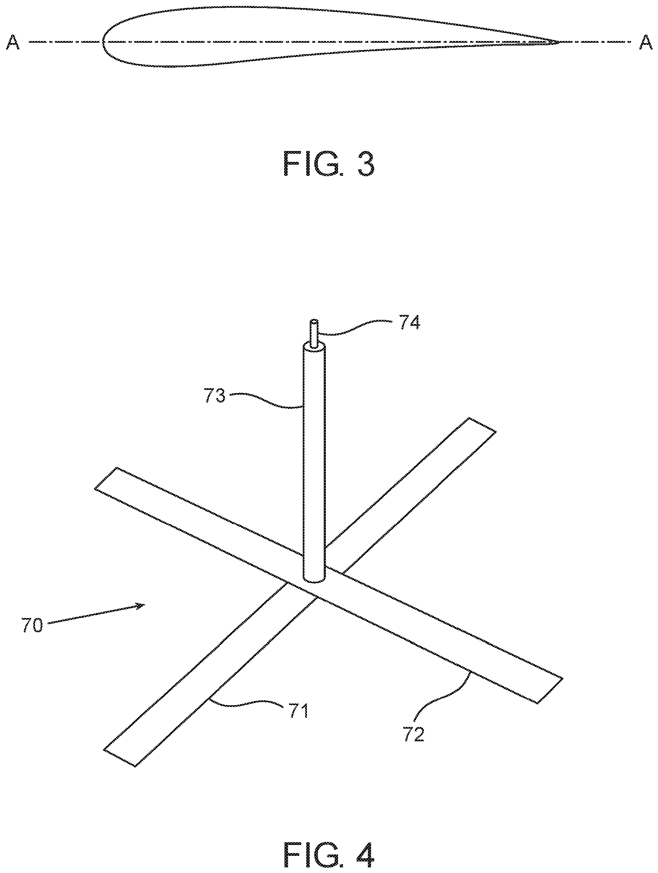

Fig. 3 is a cross section view of the horizontal stabilizer 40. The cross section is in a shape of an airfoil, and this cross-section shape includes the vertical stabilizer 30, which is shown here as horizontal. Referring again to Fig, 2, the vertical stabilizer 30, the horizontal stabilizer 40, and the elevator 41 (and optionally part of the fuselage 10, and an optional rudder) form together a structure having the shape of one wing 35, which is substantially horizontal. The propeller 51 has been turned 90° about the yaw axis (the vertical axis), so that it now points toward the trailing edge of this one wing 35. In one example, the propeller is turned together with the motor 50, which is mounted on a pivot shaft 53. The pivoting of the propeller and the engine may be done by a pivoting actuator (not shown), such as but not limited to, a servo motor or hydraulic or pneumatic actuator.

Fig. 4 is a perspective view of a take-off support device 70 for the aircraft of the present invention. It may include a vertical column 73 supported by two cross bars 71 and 72 which are designed to lie on a level ground. On the top of column 73, a pin 74 is inserted. Before taking off, the aircraft is placed on column 73, so that pin 74 is inserted into a hole on the aircraft (not shown), located at or in proximity to the center of gravity of the aircraft. In another embodiment of the present invention, there is no need for a take-off support device, and the aircraft can take off or land at any flat surface. Wheels (not shown) may be mounted at the bottom of the aircraft. The wheels are positioned to roll freely around the center of gravity of the aircraft. When the aircraft rotates before taking of or just after landing, the wheels roll in circles on the ground.

Referring to Fig. 2, when the motor 50 is actuated to drive the propeller 51, a thrust is created and the aircraft starts to rotate about the yaw axis that extends through the center of gravity (in this case the azimuthal rotation is counterclockwise). As the angular velocity increases, airflow creates lift force on the one wing 35. When the angular velocity of the aircraft is high enough, the lift force elevates the aircraft from the take-off support device 70 in Fig. 4; take off starts. During vertical take-off, hovering and vertical landing, the aircraft acts as a monocopter.

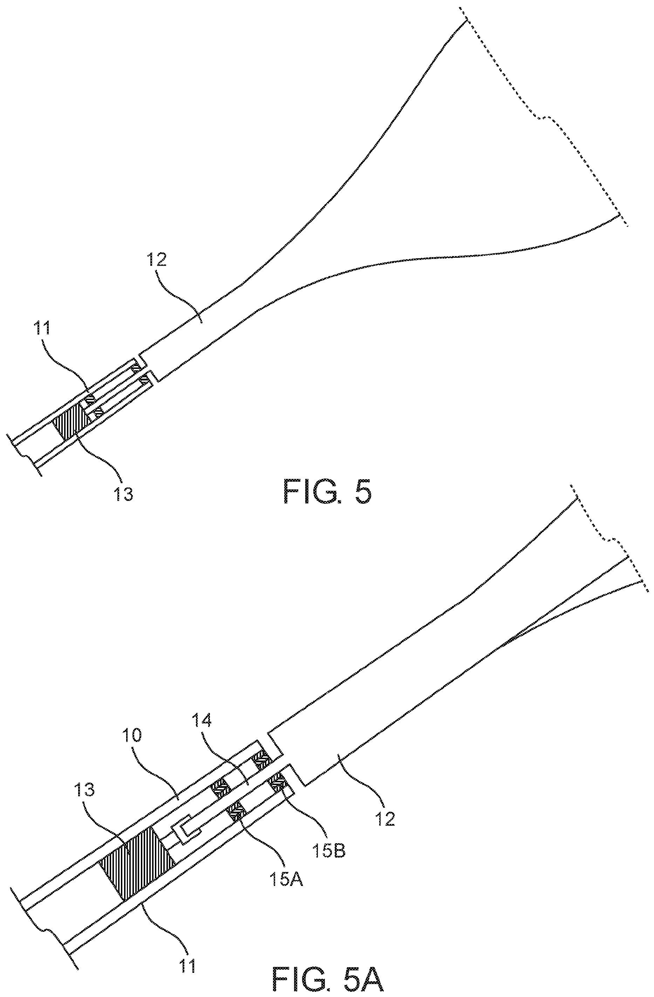

Fig. 5 is a cross section view of the one wing 35 and its attachment arrangement to the fuselage. Fig. 5A is an enlargement of the connection area between one wing 35 and the fuselage. The one wing 35 ends with a round shaft 14 which may be inserted through two bearings 15a and 15b which are housed in fuselage 10. Shaft 14 may be coupled to an actuator such as a servo motor 13 that can alter the angle of attack of wing 35 with respect to wings 20 and 21. When the aircraft is in hovering configuration and rotating, masses of batteries 61 and 62 and the motor 50 acquire considerable angular momentum, which stabilize the aircraft. By adjusting the angle between the one wing 35 and the wings 20 and 21, using servo motor 13, a proper and stable angle of attack of one wing 35 is achieved. When the aircraft of the present invention is in the cruise configuration, servo motor 13 adjusts horizontal stabilizer 40 to be parallel to the wings, as is the case in a standard aircraft.

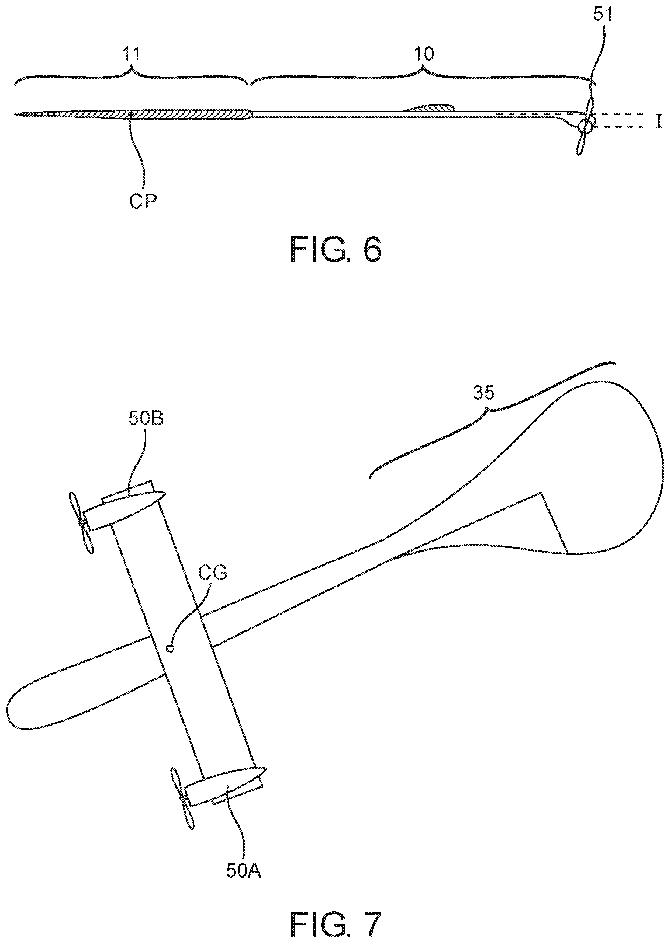

Fig. 6 is a side view of the aircraft of the present invention. In this embodiment, the motor is located slightly downwards with respect to the center of pressure of one wing 35, marked as "C.P.". When the aircraft is rotating, the thrust of propeller 51 pulls the front end of the aircraft from a point that is offset downwards at a length marked as "1" from the center of pressure C.P. This offset creates a pitching moment that decreases the angle of attack of wing 35.

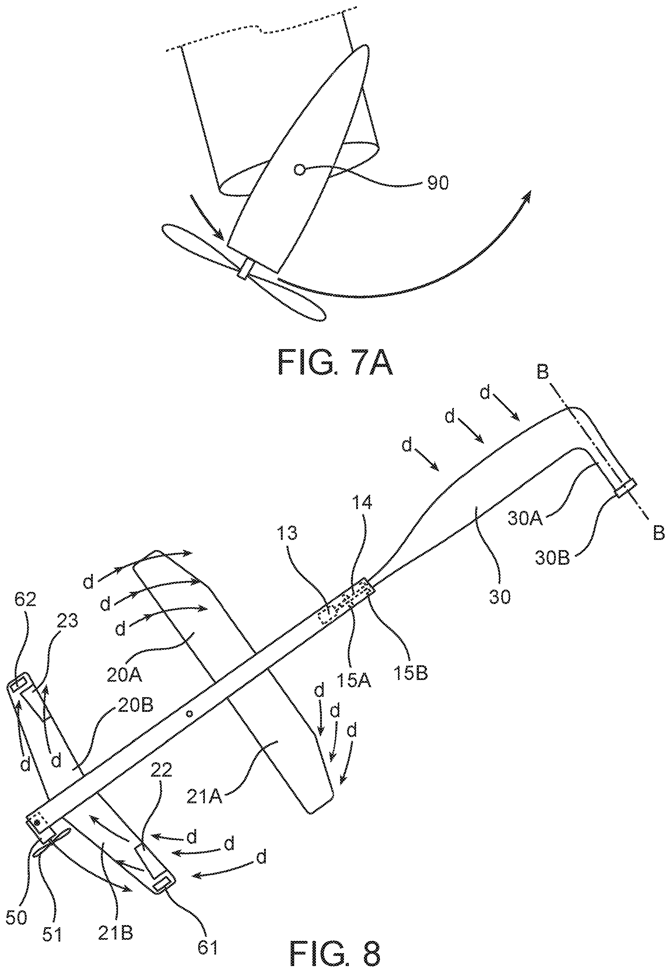

Fig. 7 is a general view of an aircraft of the present invention in another embodiment. In this embodiment, the aircraft has two motors 50A and 50B, each one is located on one of the wings, in this example at the wing's tips. While in cruise, the aircraft flies like a standard twin engine aircraft. While taking off, hovering or landing, only one motor is in operation to drive its propeller. The aircraft thus rotates about its center of gravity (about the yaw axis in azimuth), and one wing 35 creates lift, as described above. In case that one motor does not have enough power for taking off, the other motor can alter its direction of rotation, in order to reverse the thrust, while the first motor maintains a forward thrust. Altering the direction of rotation will reduce the efficiency of the propeller, but it will still contribute power to rotate the aircraft.

Fig. 7A illustrates another embodiment of the present invention, in which one of the motors is mounted on a pivot or hinge 90, so that the propeller can be rotated backward. When turned, the thrust of both motors 50A and 50B rotates the aircraft around its center of gravity.

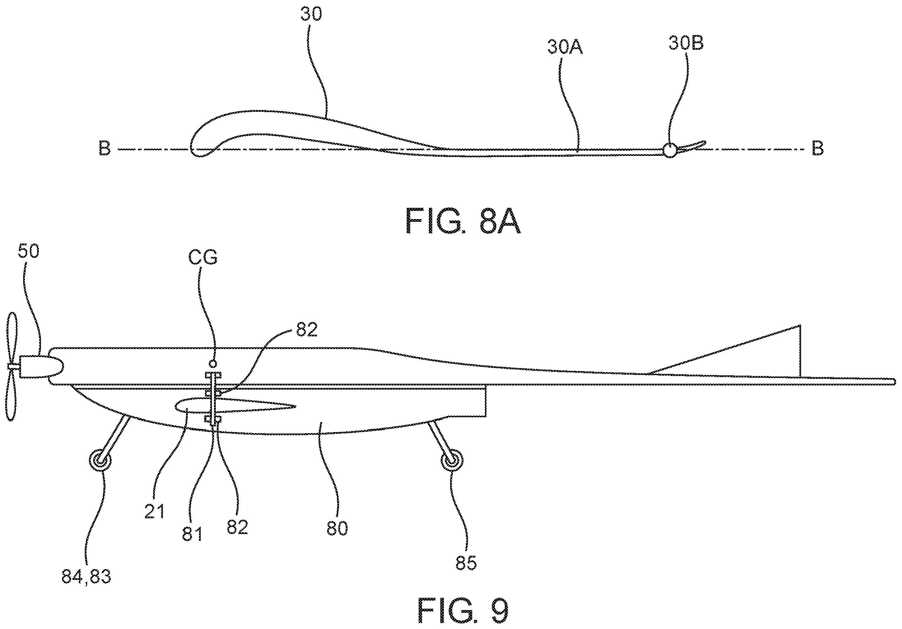

Fig. 8 is top view of the aircraft in another embodiment, while hovering. In this embodiment, the aircraft takes the form of a canard airplane. In general, the length of each wing of a canard aircraft is shorter than a wing of a conventional configuration aircraft. Thus, when rotating about the center of gravity CG, the wings acquire lower velocity in respect to the surrounding air, and less drag is created. In addition, the wings, being shifted aside from the center of gravity, hit the air in a relatively obtuse angle, which further reduces the drag created. The direction of the air flow that hit the wings is designated by arrows d. Referring to Fig. 8, it is seen that swept back canard wings and tapered tips of the main wings, which can also be swept forward wings, further reduce unwanted drag. Fig. 8a is a cross section view of the vertical stabilizer 30. In this example there is an extension 30a with a flap 30b at the end of the vertical stabilizer 30. While rotating, extension 30a functions as a horizontal stabilizer, and flap 30b functions as an elevator of vertical stabilizer 30, which functions as a rotating wing of the aircraft. Vertical stabilizer 30 may be coupled to the fuselage via shaft 14 and bearings 15a and 15b, and can be actuated by a servo motor 13, in the same manner that was described for Fig. 5A. The coupling of shaft 14 to servo motor 13 may be via a clutch, as so to enable vertical stabilizer 30 to freely alter its angle of attack while in hover mode. Thus, extensions 30a and flap 30b can independently control the angle of attack of vertical stabilizer, 30 which functions as a rotating wing.

Fig. 9 is a cross section view of the aircraft in another embodiment. In this embodiment, an additional compartment 80 is added. The compartment 80 does not rotate with the aircraft while it takes off, hovers or lands. The compartment 80 may be coupled to the aircraft via a shaft 81, which is supported by bearings 82. In this case, the wings 21 and 22 are coupled to compartment 80, and they do not rotate when taking off, hovering or landing. The airfoil shape of one wing 35 is reflex, in order to control and stabilize its angle of attack, instead of the inertial stabilizing action of the spinning wings in the former embodiments. At the bottom of compartment 80 are mounted front wheels 83 and 84 and a rear wheel 85, on which the aircraft can stand before taking of and after landing. In this embodiment the aircraft does not need the take-off support device 70 of Fig. 4. The compartment 80 can carry a pilot, passengers or equipment that should not rotate for any reason.

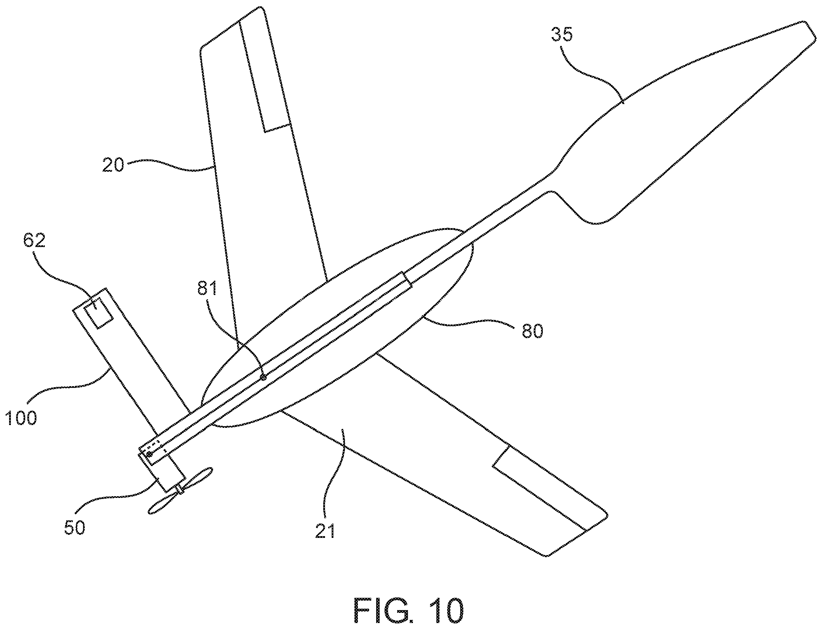

Fig. 10 is a top view of the transformable type VTOL aircraft in another configuration of a canard aircraft. As in Fig. 9, compartment 80 is coupled to the aircraft via a shaft 81. The compartment does not rotate with the aircraft while it takes off, hovers or lands. Wings 20 and 21 are coupled to the compartment 80, and do not rotate. In this case, there is only one canard wing 100 at the right side of the aircraft. A left canard wing was avoided, in this example, in order to eliminate instability and vibrations while the aircraft is rotating. The left main wing 21 is slightly larger than the right wing 20, providing more lift at the left, which compensate the missing lift at the left side of the canard. Battery 62 or other relatively heavy component is mounted at the tip of the canard wing. While hovering and rotating, the battery acquires considerable angular momentum, which stabilizes the aircraft. The wing one 35, when in cruise mode, includes only the vertical stabilizer.

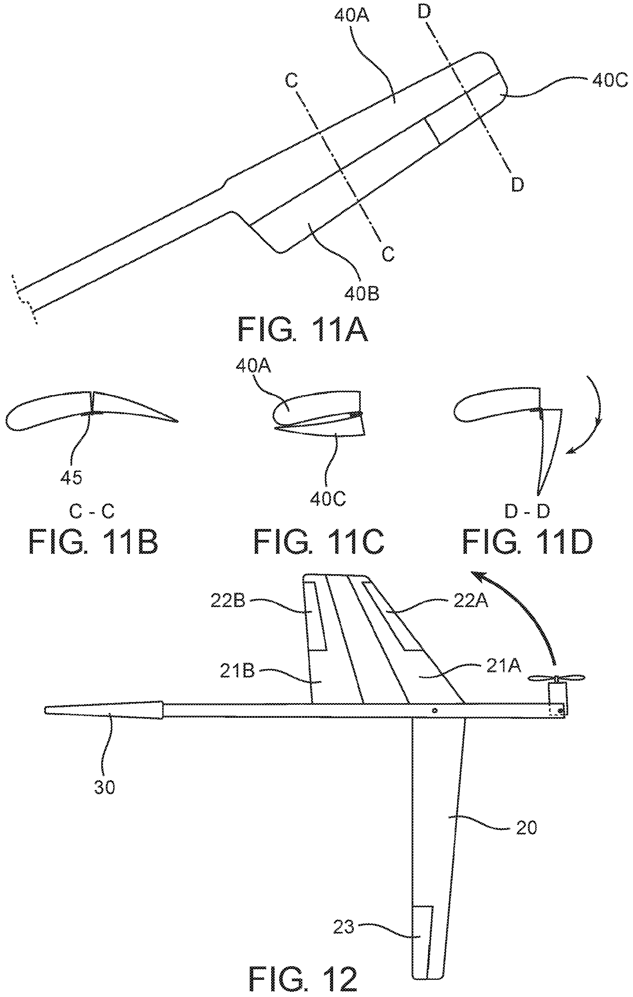

In one embodiment of the aircraft, shown in Fig. 11A, there is one wing 35 (one wing 35 described above). In order to function properly while hovering, the one wing 35 is designed to create enough lift, and to do it efficiently.

When in level flight, one wing 35, designed under the above requirements, might be too large. The area exposed to the air flow (wetted area) will be large, and will cause an excessive drag. In addition, too large tail surfaces may reduce maneuverability, and may cause stability issues. Fig. 11A is a top view of the wing in which, while cruising, wetted area is reduced.

In this embodiment, one wing 35 is divided into two parts along a line crossing in proximity to the center of it, lengthwise. The first part is marked as 40A, and the second is combined from 40B and 40C. When hovering, all these parts create a wing with sufficient area. When in level flight, parts 40B and 40C are pivoting about hinges 45 (only one is shown, in Figure 11B) by 180°, to create a substantially closed structure, as shown in Figure 11C. Thus, the wetted area is reduced.

Likewise, one wing 35 can be divided and folded into more than two parts.

In case more yow stability is needed, only part 40B is pivoted by 180°. Part 40C is pivoted by 90°, as shown in Fig. 11D, and functions as a horizontal stabilizer. The pivoting of parts 40B and 40C may be done by a pivoting actuator, such as but not limited to, a servo motor or hydraulic or pneumatic actuator, in a manner known in the art.

Referring again to Fig, 2, when the aircraft rotates counterclockwise, its right wing crosses the air and creates lift. This lift can help the aircraft to hover. The left wing, however, attacks the air with its tailing edge first, and cannot create lift efficiently. Therefore, there may be some advantages for designing the right wing and the left wing asymmetrically.

The invention is not limited to any one kind of wing design, and can be carried out with any type of wing, such as those described above and other wings, such as but not limited to, joined wings, box wings, rhomboid wings, annular wings, cylindrical wings, and many more. The wings can be symmetrical or asymmetrical.

Fig. 12 is a top view of another embodiment of the aircraft, in which the wings are asymmetrical. At the left side, there are a front wing 21a and a rear wing 21b, constructed as a joined wing configuration, also known as a box or rhomboid wing. At the right side of the aircraft, a single wing 20 which is longer is mounted.

When in a level flight, the right wing and the left wings, though very different in shape, are designed to substantially create balanced lift and drag forces, to ensure a balanced flight. Ailerons 22a, 22b and 23 are used to control pitch and roll, and vertical stabilizer 30 which is positioned vertically, stabilizes the yaw movements.

When in hover mode, the vertical stabilizer 30, positioned close to a vertical orientation, creates a desirable angle of attack and creates lift. Right wing 20 creates lift as well. The left wings 21a and 21b are relatively short; therefore, they cross the air in a low speed, and do not induce much drag.

## Claims

1. An aircraft comprising:
a fuselage (10) comprising a front portion and a tail (11), said fuselage (10) having a longitudinal axis, rotation about which is roll rotation, a lateral axis, rotation about which is pitch rotation, and a vertical axis, rotation about which is yaw rotation, wherein said tail (11) is in one horizontal plane and has a lateral cross section shape of an airfoil;
an engine (50) configured to create thrust and pivotally coupled to a front end of said fuselage (10) so that said engine (50) is pivotable in the yaw rotation;
an actuator coupled to said engine (50) and arranged to pivot said engine (50) in the yaw rotation, such that the aircraft is a monocopter capable of taking-off and landing vertically and flying horizontally; and
at least one wing (20, 21) coupled to said fuselage (10);
wherein
said tail (11) comprises a vertical stabilizer (30), a horizontal stabilizer (40) and an elevator (41),
the aircraft being **characterised in that** said vertical stabilizer (30) is pivotable about the longitudinal axis of said fuselage (10) to a horizontal position and to a vertical position, and when said vertical stabilizer (30) is in the horizontal position, said vertical stabilizer (30) and said horizontal stabilizer (40) form together a structure having the shape of one horizontal wing (35), which is a rotating wing structure formed with non-pivoting parts of said tail (11).

2. The aircraft according to claim 1, wherein a length of said tail (11) measured from a center of gravity of the aircraft to an end of said tail (11) is larger than a length of said wing (20, 21), measured from a center of gravity of said aircraft to a tip of said wing (20, 21).

3. The aircraft according to claim 1, wherein said engine (50) has one configuration in which said engine (50) is aligned with said longitudinal axis and provides thrust to cause said aircraft to fly forward, and another configuration in which said engine (50) is pivoted in the yaw rotation to provide a vector of thrust parallel to said lateral axis and cause said aircraft to azimuthally rotate as a monocopter.

4. The aircraft according to claim 1, wherein the aircraft comprise two wings (20, 21) with an engine (50A, 50B) mounted on each wing (20, 21), wherein one of said engines (50A, 50B) can reverse its direction of rotation, as so to reverse the thrust of a propeller (51), and cause said aircraft to azimuthally rotate as a monocopter.

5. The aircraft according to claim 1, wherein the aircraft comprise two wings (20, 21) with an engine (50A, 50B) mounted on each wing (20, 21), wherein one of said engines (50A, 50B) is mounted on a pivot or hinge (53) and can pivot to reverse thrust direction, and cause said aircraft to azimuthally rotate as a monocopter.

6. The aircraft according to claim 1, wherein said tail (11) is pivotally coupled to said fuselage (10) via bearings (15a, 15b) and is coupled to an actuator operative to change an angle of said tail (11) with respect to said at least one wing (20, 21).

7. The aircraft according to claim 1, further comprising a compartment (80) coupled to said fuselage wherein said compartment (80) does not rotate with said aircraft.

8. The aircraft according to claim 1, wherein said tail (11) is dividable and foldable about at least one longitudinal line into at least two parts.

9. The aircraft according to claim 1, wherein said at least one wing (20, 21) comprises asymmetric left and right wings (21a, 21b, 20), and wherein said aircraft is rotatable in yaw rotation about said vertical axis.

## Patentansprüche

1. Flugzeug, umfassend:
einen Rumpf (10), umfassend einen vorderen Abschnitt und ein Heck (11), wobei der Rumpf (10) eine Längsachse, um die eine Rollrotation erfolgt, eine Querachse, um die eine Nickrotation erfolgt, und eine Vertikalachse, um die eine Gierrotation erfolgt, aufweist, wobei sich das Heck (11) in einer horizontalen Ebene befindet und im Seitenquerschnitt die Form eines Tragflügels aufweist;
einen Motor (50), der so konfiguriert ist, dass er Schub erzeugt, und schwenkbar mit einem vorderen Ende des Rumpfs (10) gekoppelt ist, so dass der Motor (50) in der Gierrotation schwenkbar ist;
einen mit dem Motor (50) gekoppelten Aktuator, der so angeordnet ist, dass er den Motor (50) in der Gierrotation schwenkt, so dass das Flugzeug ein Monokopter ist, der senkrecht starten und landen und horizontal fliegen kann; und
mindestens einem mit dem Rumpf (10) verbundenen Flügel (20, 21); wobei
das Heck (11) einen vertikalen Stabilisator (30), einen horizontalen Stabilisator (40) und ein Höhenruder (41) umfasst, wobei
das Flugzeug **dadurch gekennzeichnet ist, dass** der vertikale Stabilisator (30) um die Längsachse des Rumpfes (10) in eine horizontale Position und in eine vertikale Position schwenkbar ist, und wenn sich der vertikale Stabilisator (30) in der horizontalen Position befindet, der vertikale Stabilisator (30) und der horizontale Stabilisator (40) zusammen eine Struktur bilden, die die Form eines horizontalen Flügels (35) hat, der eine rotierende Flügelstruktur ist, die mit nicht schwenkbaren Teilen des Hecks (11) gebildet ist.

2. Flugzeug gemäß Anspruch 1, wobei eine Länge des Hecks (11), gemessen vom Schwerpunkt des Flugzeugs bis zu einem Ende des Hecks (11), größer ist als eine Länge des Flügels (20, 21), gemessen vom Schwerpunkt des Flugzeugs bis zu einer Spitze des Flügels (20, 21).

3. Flugzeug gemäß Anspruch 1, wobei der Motor (50) eine Konfiguration, in der der Motor (50) mit der Längsachse ausgerichtet ist und Schub liefert, um das Flugzeug vorwärts fliegen zu lassen, und eine andere Konfiguration aufweist, in der der Motor (50) in der Gierrotation geschwenkt wird, um einen Schubvektor parallel zur Querachse zu liefern und das Flugzeug als Monokopter azimutal rotieren zu lassen.

4. Flugzeug gemäß Anspruch 1, wobei das Flugzeug zwei Flügel (20, 21) mit einem an jedem Flügel (20, 21) montierten Motor (50A, 50B) umfasst, wobei einer der Motoren (50A, 50B) seine Drehrichtung umkehren kann, um den Schub eines Propellers (51) umzukehren und das Flugzeug als Monokopter azimutal rotieren zu lassen.

5. Flugzeug gemäß Anspruch 1, wobei das Flugzeug zwei Flügel (20, 21) mit einem an jedem Flügel (20, 21) montierten Motor (50A, 50B) umfasst, wobei einer der Motoren (50A, 50B) an einem Drehpunkt oder Scharnier (53) angebracht ist und schwenkbar ist, um die Schubrichtung umzukehren und das Flugzeug als Monokopter azimutal rotieren zu lassen.

6. Flugzeug gemäß Anspruch 1, wobei das Heck (11) über Lager (15a, 15b) schwenkbar mit dem Rumpf (10) gekoppelt ist und mit einem Aktuator gekoppelt ist, der einen Winkel des Hecks (11) in Bezug auf den mindestens einen Flügel (20, 21) verändern kann.

7. Flugzeug gemäß Anspruch 1, ferner umfassend ein mit dem Rumpf gekoppeltes Abteil (80), wobei sich das Abteil (80) nicht mit dem Flugzeug dreht.

8. Flugzeug gemäß Anspruch 1, wobei das Heck (11) um mindestens eine Längslinie in mindestens zwei Teile teilbar und klappbar ist.

9. Flugzeug gemäß Anspruch 1, wobei der mindestens eine Flügel (20, 21) asymmetrische linke und rechte Flügel (21a, 21b, 20) umfasst und wobei das Flugzeug um die vertikale Achse in Gierrotation drehbar ist.

## Revendications

1. Un aéronef comprenant :
un fuselage (10) comprenant une partie avant et une queue (11), ledit fuselage (10) ayant un axe longitudinal, autour duquel une rotation correspond à une rotation de roulis, un axe latéral, autour duquel une rotation correspond à une rotation de tangage, et un axe vertical, autour duquel une rotation correspond à une rotation de lacet, ladite queue (11) se trouvant dans un premier plan horizontal et ayant une forme à profil aérodynamique en section transversale latérale ;
un moteur (50) conçu pour créer une poussée et relié de manière pivotante à une extrémité avant dudit fuselage (10) de sorte que ledit moteur (50) puisse pivoter selon la rotation de lacet ;
un actionneur relié audit moteur (50) et agencé de façon à faire pivoter ledit moteur (50) selon la rotation de lacet, de telle sorte que l'aéronef est un monocoptère apte à décoller et à atterrir verticalement et à voler horizontalement ; et
au moins une aile (20, 21) reliée audit fuselage (10) ;
dans lequel
ladite queue (11) comprend un stabilisateur vertical (30), un stabilisateur horizontal (40) et une gouverne de profondeur (41),
ledit aéronef étant **caractérisé en ce que** ledit stabilisateur vertical (30) est apte à pivoter autour de l'axe longitudinal dudit fuselage (10) vers une position horizontale et vers une position verticale, et lorsque ledit stabilisateur vertical (30) est en position horizontale, ledit stabilisateur vertical (30) et ledit stabilisateur horizontal (40) formant ensemble une structure ayant la forme d'une aile horizontale (35), qui est une structure d'aile rotative formée avec des parties non-pivotantes de ladite queue (11).

2. L'aéronef selon la revendication 1, dans lequel la longueur de ladite queue (11) mesurée depuis le centre de gravité de l'aéronef jusqu'à une extrémité de ladite queue (11) est supérieure à la longueur de ladite aile (20, 21) mesurée depuis le centre de gravité dudit aéronef jusqu'à une extrémité de ladite aile (20, 21).

3. L'aéronef selon la revendication 1, dans lequel ledit moteur (50) a une configuration dans laquelle ledit moteur (50) est aligné avec ledit axe longitudinal et fournit une poussée pour faire voler ledit aéronef vers l'avant, et une autre configuration dans laquelle ledit moteur (50) pivote selon la rotation de lacet pour fournir un vecteur de poussée parallèle audit axe latéral et faire tourner ledit aéronef azimutalement à l'instar d'un monocoptère.

4. L'aéronef selon la revendication 1, l'aéronef comprenant deux ailes (20, 21) avec un moteur (50A, 50B) monté sur chaque aile (20, 21), l'un desdits moteurs (50A, 50B) étant apte à inverser son sens de rotation, de manière à inverser la poussée d'une hélice (51) et à faire tourner ledit aéronef azimutalement à l'instar d'un monocoptère.

5. L'aéronef selon la revendication 1, l'aéronef comprenant deux ailes (20, 21) avec un moteur (50A, 50B) monté sur chaque aile (20, 21), l'un desdits moteurs (50A, 50B) étant monté sur un pivot ou une charnière (53) et étant apte à pivoter pour inverser le sens de poussée, et faire tourner ledit aéronef azimutalement à l'instar d'un monocoptère.

6. L'aéronef selon la revendication 1, dans lequel ladite queue (11) est reliée de manière pivotante audit fuselage (10) via des roulements (15a, 15b) et est reliée à un actionneur opérationnel pour modifier un angle de ladite queue (11) par rapport à ladite au moins une aile (20, 21).

7. L'aéronef selon la revendication 1, comprenant en outre un compartiment (80) relié audit fuselage, ledit compartiment (80) ne tournant pas avec ledit aéronef.

8. L'aéronef selon la revendication 1, dans lequel ladite queue (11) est divisible et pliable autour d'au moins une ligne longitudinale en au moins deux parties.

9. L'aéronef selon la revendication 1, dans lequel ladite au moins une aile (20, 21) comprend des ailes gauche et droite asymétriques (21a, 21b, 20), et dans lequel ledit aéronef est apte à tourner selon la rotation de lacet autour dudit axe vertical.
